# EUROPEAN PATENT APPLICATION

(11) **EP 1 603 055 A1**
(43) Date of publication of application: **07.12.2005**
(21) Application number: 04078370.6
(22) Date of filing: 13.12.2004
(51) Int. Cl.: G06F 17/30

(54) **Simple input method for a web browser**

(30) Priority: 31.05.2004 US 709821
(71) Applicant: ACER INCORPORATED, Taipei Hsien 221 (TW)
(72) Inventor: Lu, De-Jen, Hsi-Chih, Taipei Hsien (TW)
(74) Representative: Mertens, Hans Victor

(57) **Abstract**

A simple input method for a web browser allowing a user to launch a web page from an on-screen menu when the web content is displayed on any enabled display device without a pointing device to aid navigation. The method for navigating in a web page environment includes parsing the incoming mark-up language using an HTML parser, allocating an index number to each hyperlink of the web page and creating an anchor table which records the associations made, displaying the modified mark-up language with each hyperlink shown with an index number prefixed, and launching subsequent web pages according to the index number(s) selected by the user via a suitable input means, which in turn may include a numeric keypad of a remote control handset.

## Description

The present invention relates to a method of user input into a web browser, more particularly to a simplified method allowing a user to select web page content without using a pointing device.

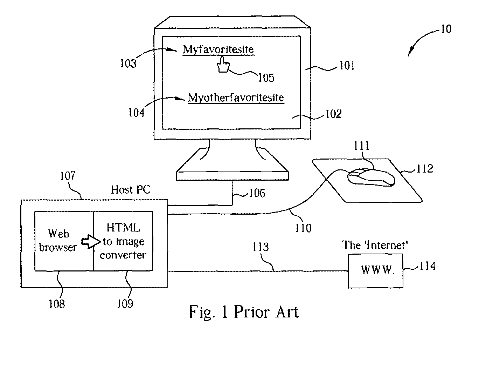

Although access to the Internet is fast becoming de rigueur, particularly amongst the 'tech-savvy' segment of society, and web page content is gradually leaving the constraints of its traditional home, the PC (personal computer) monitor screen, and spreading to devices such as PDAs (personal digital assistants), mobile phones and televisions, the essential requirements for a system that will allow a user to view web page content remain the same. That is, in order to display HTML (Hyper Text Mark-up Language) content a system needs a display, a browser program, a means of converting the browser output into an image (although this may also be a function of the browser itself), a means of hosting the browser and image converter, a means of user input and a means of connecting to the Internet. The Internet access devices that come most readily to mind, i.e. the PC and the notebook PC, generally have all the above-mentioned attributes, please see Fig.1, which depicts a well accepted means of Internet access and navigation 10. Referring to Fig.1, a mark-up language web page 102, retrieved from the Internet 114 by a web browser 108 hosted by a PC 107 and converted into an image by a HTML to image converter 109, is displayed on a monitor 101. Hyperlinks (features of HTML web pages that link the currently displayed page to other pages) 103 and 104 are shown as text, but indeed may take virtually any graphic form; these areas of the web page are 'clickable', i.e. they become active when a cursor 105 is placed over them, generally by means of a pointing device such as a mouse 111.

However, there are circumstances under which it is desirable to view web page content on other sorts of displays which may be a degree of separation away from a computing device and moreover, the convenience of a pointing device for user input, while retaining the ability to navigate around the said content. Examples of the above are television (TV) sets, projected displays, video walls etc.

There are various devices that have been designed specifically as hosts for web browsers and enable users to access the Internet directly without the use of a PC, two such devices are SONY's WEB TV and BUSH's INTERNET TV, these systems being particularly attractive to those wishing only to access internet and e-mail facilities without going to the lengths of purchasing a PC. These generally take the form of a 'set top box' housing enough processing power to host a web browser and generate a video signal, and a modem for connecting to the Internet. Also, with the increasing use of PC projectors/data projectors during meetings, conferences and presentations, and the possibility that these devices will receive data from a network instead of a dedicated PC or notebook PC, it's likely that the convenience of a pointing device may not be available in certain configurations.

In the above cases, the particular application (for example, a family accessing the internet via an appropriately equipped TV), or the presence of a degree of separation between the display and the computer (for example, a group of people participating in a networked PC projector or video wall based interactive presentation), can mean that it's impractical or inconvenient to provide a pointing device to aid navigation of the web page content. The pointing device is generally the means of choice for web navigation by 'hyperlink' (see Fig.1); previous solutions to the provision of pointing devices for use in the situations mentioned above have involved the use of infrared keyboards/track balls etc. or means of cursor manipulation incorporated into a remote control handset. The latter solution, i.e. the embodiment of cursor control functions into the widely accepted remote control handset, while offering a degree of convenience, retains the drawbacks associated with the 'joy-stick' style pointing devices commonly utilized in notebook computer designs.

It is an objective then of the present invention, to provide a simple input method for a web browser when the web content is to be displayed on a display device without a pointing device to aid navigation.

A simple method for navigating in a web page environment comprises allowing a user to launch a web page from an on-screen menu, the web page being displayed on any enabled display device, and parsing the incoming mark-up language, allocating an index number to each hyperlink of the web page and creating an anchor table which records the associations made, displaying the modified mark-up language with each hyperlink shown with an index number prefixed, and launching subsequent web pages according to the index number(s) selected by the user via a suitable input means.

The number of hyperlinks on a given web page may total into the hundreds; without the benefit of a pointing device to navigate the hyperlinks, an onerous amount of tab or cursor direction keystrokes can result. With each hyperlink indexed and displayed by a unique number, a user can select each onward link as if selecting a TV channel, using the numeric keypad of a remote control handset or other suitable means.

These and other objectives of the claimed invention will no doubt become obvious to those of ordinary skill in the art after reading the following detailed description of the preferred embodiment that is illustrated in the various figures and drawings.
Fig.1 shows a well accepted means of Internet access and navigation.
Figs.2 and 3 show a flow diagram detailing the method of a preferred embodiment of the present invention.
Fig.4 shows a preferred embodiment of the present invention.
Fig.5 shows an alternative embodiment of the present invention.
Fig.6 shows a drawing of an anchor table.

As mentioned above, it is an objective of the present invention to provide a simple input method to allow web navigation in situations where the web content is to be displayed on a display device for which a pointing device is not provided or is incompatible for use due to prevailing circumstances.

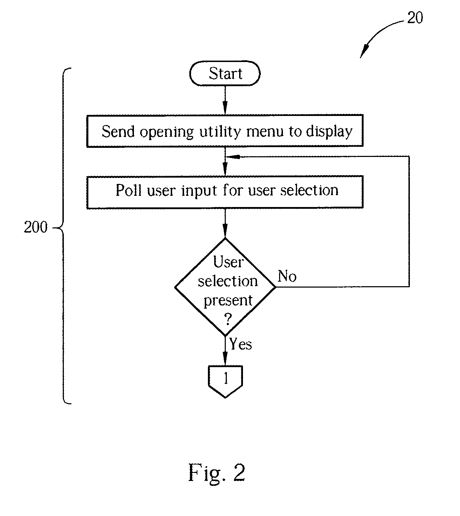

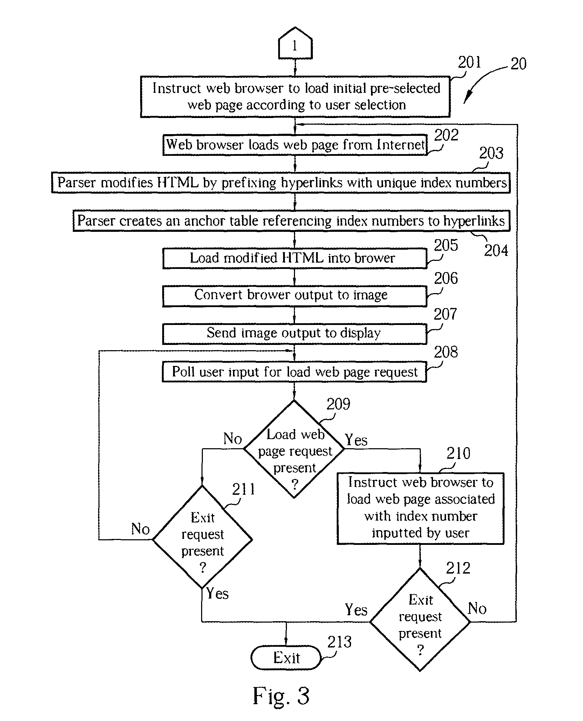

The principle of operation for all embodiments is as follows, and is also set forth in Figs. 2 and 3 in the form of a flow diagram 20:

Please note: The initial stages of operation are outside the remit of the invention, but would however, for practical purposes, generally be included as part of a host application containing the simple web browser input method, and are included for completeness and in the interests of clarity.
- Block 200:: As a prelude to browsing the Internet using the present invention, the user may be presented with an opening menu, which again may allow a numerical user selection input or a simplified cursor shift and select system to launch a web page. The purpose of the opening menu is to allow the user to select an initial web page using the available user input device because, as mentioned above, the user will be not generally have access to a keyboard or pointing device. This initial stage terminates once the user has made a first selection.
- Steps 201-2:: Once a request (initiated by a user input) to load a web page has been made, an HTML (Hyper Text Mark-up Language) parser is used to parse a web page which is loaded according to the user input, from the Internet via an interface to a web browser.
- Step 203:: The parser modifies the HTML code (web page) by prefixing each hyperlink with a unique index number.
- Step 204:: The parser also constructs an anchor table in which the associations between the hyperlink(s) and its/their allocated index number(s).
- Step 205:: The modified HTML code is made available to a web browser, the output of which is a web page constructed according to the modified HTML code.
- Step 206:: The browser output is converted into an image. It is to be noted that this step is optional. If the display device to be used to navigate the web content has a built-in web browser program for directly processing the HTML-based web page, this step can be omitted.
- Step 207:: An RIO (Remote Input/Output) server captures the converted web page display image and delivers it to a display driver or directly to a display device (if the display device can accept the display image without further translation, as in the case of a PC projector).
- Step 208-9:: The user, being presented with the indexed web page content generated by the present invention, can select one of the displayed hyperlinks simply by its index number via the user input means associated with the display device, or choose to exit the environment (Step 211).
- Step 210:: The request to load another web page is relayed to the web browser via the RIO server and, assuming the user does not opt to exit the environment (Step 212), the process is repeated from Step 202 onward.

In other embodiments the steps shown above can be performed in another order or can be interrupted by intermediate steps not described here.

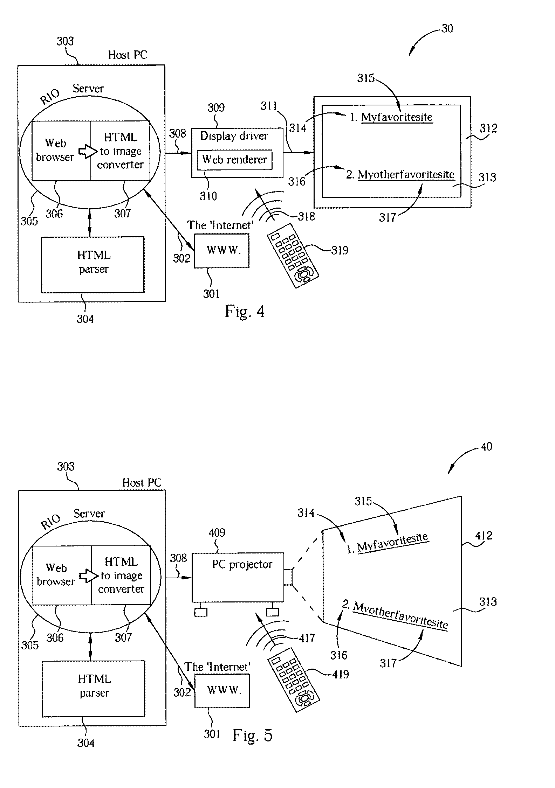

For example, Fig.4 shows an embodiment of the present invention 30 in block schematic form, in which a host PC 303 is connected to the 'Internet' 301 via an interface 302. Commonly used connection options are many and varied and can include normal phone lines, Ethernet links and/or other network conventions, optical and microwave links. Resident in the host PC 303 is an HTML parser 304 and an RIO server 305 (an example of which is Intel's UPnP-based Remote I/O technology); resident in the RIO server 305 is a web browser 306 and a HTML to image converter 307. The host PC 303 is electrically connected via an interface 308 to a display driver 309, which in turn is electrically connected to a display device 312, in this embodiment a TV. The display driver 309 is equipped with a web page renderer 310 for translating the web page image into a video format suitable for the TV 312, and is also equipped to receive user inputs 318 from an input device, in this embodiment an infra-red remote control handset 319.

Using the method mentioned above, the embodiment of Fig.4 creates a web page display 313 on the TV 312, featuring hyperlinks 315 and 317 (featured by way of example) prefixed with unique index numbers 314 and 316 respectively. The user may then select the next web page to be loaded by inputting a corresponding number on the display driver remote control handset 319.

Fig.5 shows a second embodiment of the present invention 40 in block schematic form. The arrangement is similar to that shown in Fig.4, the display driver 309 and display device (TV) 312 being replaced by a single display device 409, in this case a PC projector. The operation of this embodiment conforms with the principle of operation stated above; unlike the TV display of the first preferred embodiment 30, the PC projector 409 can accept the web page image without further translation being required, therefore a display driver is omitted. Similarly then, the embodiment of Fig.5 creates a web page display 313 on a projection screen or surface 412, featuring hyperlinks 315 and 317 (featured by way of example) prefixed with unique index numbers 314 and 316 respectively. Again, the user may then select the next web page to be loaded by inputting a corresponding number on the PC projector remote control handset 419.

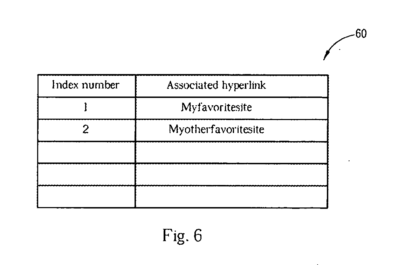

Fig.6 shows a drawing of an anchor table 60 used to record the associations between web page hyperlinks and their allocated index numbers. The index numbers (featured in the left hand column) are the index numbers that the web page hyperlinks (featured in the right hand column) will be prefixed with when displayed. In this embodiment, the anchor table 60 is stored in memory of the host PC 303, however, in other embodiments the anchor table 60 could be stored in another device or form an integral part (i.e. by hard-coding) of the parser 304 or the web browser 306.

Although certain choices have been made as to what system 'building blocks' are used in a preferred embodiment (the term 'building blocks' extending to both hardware and software elements of the present invention), these choices are a matter of design and build expediency and do not alter the concept of the present invention, therefore they should not be viewed as limiting with respect to alternative means of enablement.

Those skilled in the art will readily observe that numerous modifications and alterations of the device may be made while retaining the teachings of the invention. Accordingly, the above disclosure should be construed as limited only by the metes and bounds of the appended claims.

## Claims

1. Method for navigating in a web page environment, the method comprising the following steps:
(a) launching a mark-up language web page;
(b) modifying incoming mark-up language web page by allocating an index number to a hyperlink on the web page;
(c) creating an anchor table associating hyperlink information with allocated index numbers;
(d) interpreting the modified mark-up language and displaying a result; and
(e) launching a subsequent web page according to a hyperlink associated with an inputted index number.

2. Method of claim 1, wherein the web page is launched according to a user selection from an on-screen menu.

3. Method of claim 2, wherein the web page is launched according to a user selection from a numerically indexed on-screen menu.

4. Method of claim 2, wherein the user selection comprises a numerical input corresponding to an allocated index number.

5. Method of claim 1, wherein the interpreting action of step (d) is carried out by a browser.

6. Method of claim 5, wherein the displaying action of step (d) is carried out by a display device displaying output of the browser.

7. Method of claim 1, wherein the interpreting action of step (d) is carried out by a browser and a mark-up language to image converter.

8. Method of claim 7, wherein the displaying action of step (d) is carried out by a display device displaying the output of the mark-up language to image converter.

9. Method of claim 1, wherein displaying the modified mark-up language comprises displaying hyperlinks prefixed with index numbers according to the anchor table of step (c).

10. Method of claim 1, wherein steps (a)-(e) are controlled using a remote input/output server.

11. Method of claim 1, wherein the mark-up language is hypertext mark-up language (HTML).

12. Web page content display system comprising:
an Internet connection interface for accessing the Internet; a mark-up language parser comprising code for assigning index numbers to hyperlinks contained in mark-up language and
creating an anchor table for recording index number assignments, and with access to the Internet connection interface;
a remote input/output server hosted in a computing device, the remote input/output server comprising:
a browser for translating the mark-up language into a web page;
a mark-up language to image converter for converting browser output into an image;
a display device connected to the remote input/output server, for displaying an image output of the mark-up language to image converter; and
a user input device connected to the display device for allowing a user input of an index number.

13. Web page content display system of claim 12, wherein the remote input/output server is hosted by a personal computer.

14. Web page content display system of claim 12, further comprising a display driver connected between the remote input/output server and the display device.

15. Web page content display system of claim 14, wherein the display driver further comprises an image renderer for rendering the image for the display device.

16. Web page content display system of claim 15, wherein the display device is a television.

17. Web page content display system of claim 15, wherein the display device is a PC projector.

18. Web page content display system comprising:
an Internet connection interface for accessing the Internet; a means for assigning index numbers to hyperlinks contained in mark-up language and creating an anchor table for recording index number assignments, with access to the Internet connection interface;
a remote input/output server hosted in a computing device, the remote input/output server comprising:
a browser for translating the mark-up language into a web page;
a mark-up language to image converter for converting browser output into an image;
a display device connected to the remote input/output server, for displaying the image outputted by the mark-up language to image converter; and
a user input means connected to the display device for allowing a user input of an index number.
